# EUROPEAN PATENT APPLICATION

(11) **EP 2 722 999 A1**
(43) Date of publication of application: **23.04.2014**
(21) Application number: 12815163.6
(22) Date of filing: 16.07.2012
(51) Int. Cl.: H04B 7/04

(54) **ANTENNA SYSTEM AND SIGNAL EMITTING DEVICE**

(30) Priority: 15.07.2011 CN 201110199280
(71) Applicant: Huawei Technologies Co., Ltd, Shenzhen, Guangdong 518129 (CN)
(72) Inventor: WAN, Lei, Shenzhen Guangdong 518129 (CN); FENG, Xinrui, Shenzhen Guangdong 518129 (CN); WU, Hai, Shenzhen Guangdong 518129 (CN); WU, Yong, Shenzhen Guangdong 518129 (CN)
(74) Representative: Epping - Hermann - Fischer
(86) International application number: PCT/CN2012/078705
(87) International publication number: WO 2013/010471

(57) **Abstract**

Embodiments of the present invention provide an antenna system and a signal transmit device. The antenna system includes: at least one antenna unit group, where at least two antenna units are arranged in the vertical direction in each antenna unit group, and each antenna unit includes two antennas which are crosswise arranged, where carrier frequency signals transmitted by the at least one antenna unit group are identical, and a gap between adjacent antenna units which transmit any identical carrier frequency signal in each antenna unit group is a half wavelength of a frequency of the transmitted carrier frequency signal, or a difference between the gap and the half wavelength of the frequency of the transmitted carrier frequency signal is within a first set range; and the number of antenna units which transmit each type of carrier frequency signals is determined by a gap between adjacent antenna units which transmit the type of carrier frequency signals and the coverage radii of at least two types of carrier frequency signals transmitted by the antenna unit group. The embodiments of the present invention effectively utilize each antenna unit, avoid waste and control of the antenna unit, and reduce installation and maintenance costs of the antenna system.

## Description

### CROSS-REFERENCE TO RELATED APPLICATION

This application claims priority to Chinese Patent Application No. 201110199280.X, filed with the Chinese Patent Office on July 15, 2011, and entitled "ANTENNA SYSTEM AND SIGNAL TRANSMIT DEVICE", which is incorporated herein by reference in its entirety.

### TECHNICAL FIELD

The present invention relates to the field of communications technologies, and in particular, to an antenna system and a signal transmit device.

### BACKGROUND

An advanced antenna system (Advanced antenna system; AAS) can be coordinated in full array adaptive weighting and full array static weighting, so as to achieve smooth evolution and complex application of a plurality of antennas and a network topology. The AAS can perform flexible adjustment of a beam shape and a direction on a vertical plane, so as to implement beam forming in the vertical direction that is similar to conventional beam forming in the horizontal direction, enhance a signal to noise ratio, and improve system performance.

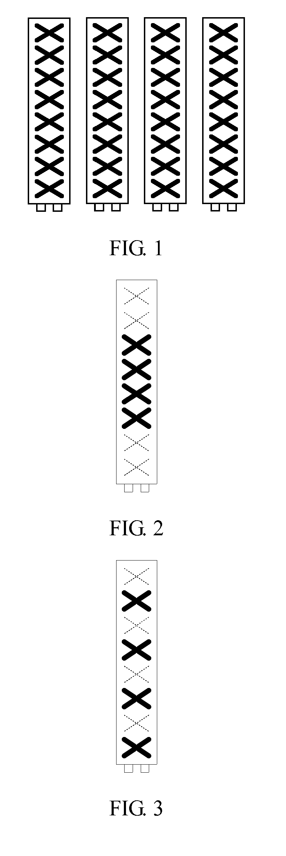

For the structure of the AAS, reference may be made to FIG. 1, which includes four antenna unit groups. Eight antenna units are arranged in the vertical direction in each antenna unit group, and each antenna unit includes two antennas. When the AAS is adopted to transmit different carrier frequency signals, weighting is generally performed on the antenna units. A part of antenna units are turned off (that is, no carrier frequency signal is transmitted on the part of antenna units), so as to meet the requirement that different carrier frequency signals have the same coverage. However, idleness and waste of an antenna unit may be caused after weighting is performed on the antenna unit.

### SUMMARY

Embodiments of the present invention provide an antenna system and a signal transmit device, so as to solve the problem of idleness and waste of an antenna unit when an AAS is adopted to transmit different carrier frequency signals in the prior art.

An embodiment of the present invention provides an antenna system, including:
at least one antenna unit group, where at least two antenna units are arranged in the vertical direction in each antenna unit group, and each antenna unit includes two antennas which are crosswise arranged, where
carrier frequency signals transmitted by the at least one antenna unit group are identical, and a gap between adjacent antenna units which transmit any identical carrier frequency signal in each antenna unit group is a half wavelength of a frequency of the transmitted carrier frequency signal, or a difference between the gap and the half wavelength of the frequency of the transmitted carrier frequency signal is within a first set range; and
the number of antenna units which transmit each type of carrier frequency signals is determined by a gap between adjacent antenna units which transmit the type of carrier frequency signals and the coverage radii of at least two types of carrier frequency signals transmitted by the antenna unit group, and the coverage radii of the at least two types of carrier frequency signals transmitted by the antenna unit group are equal or a difference between the coverage radii of the at least two types of carrier frequency signals is within a second set range.

An embodiment of the present invention further provides a signal transmit device, including: an antenna system and a power transmit module, where
the antenna system includes: at least one antenna unit group, where at least two antenna units are arranged in the vertical direction in each antenna unit group, and each antenna unit includes two antennas which are crosswise arranged, where
carrier frequency signals transmitted by the at least one antenna unit group are identical, and a gap between adjacent antenna units which transmit any identical carrier frequency signal in each antenna unit group is a half wavelength of a frequency of the transmitted carrier frequency signal, or a difference between the gap and the half wavelength of the frequency of the transmitted carrier frequency signal is within a first set range; and
the number of antenna units which transmit each type of carrier frequency signals is determined by a gap between adjacent antenna units which transmit the type of carrier frequency signals and the coverage radii of at least two types of carrier frequency signals transmitted by the antenna unit group, and the coverage radii of the at least two types of carrier frequency signals transmitted by the antenna unit group are equal or a difference between the coverage radii of the at least two types of carrier frequency signals is within a second set range;
the power transmit module is configured to transmit a carrier frequency signal; and
each antenna unit in each antenna unit group in the antenna system is connected to the power transmit module.

According to the antenna system and the signal transmit device provided in the embodiments of the present invention, a distance between adjacent antenna units which transmit any identical carrier frequency signal is a half wavelength of a frequency of the transmitted carrier frequency, or a difference is within a preset range, and the number of antenna units which transmit each type of carrier frequency signals is determined by a gap between adjacent antenna units which transmit the type of carrier frequency signals and the coverage radii of carrier frequency signals transmitted by an antenna unit group, thereby effectively utilizing each antenna unit, avoiding waste and idleness of the antenna unit, and reducing installation and maintenance costs of the antenna system.

### BRIEF DESCRIPTION OF THE DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of an existing advanced antenna system;
FIG. 2 is a schematic diagram of idleness of an antenna unit when a transmit carrier frequency of an existing advanced antenna system is 900MHz;
FIG. 3 is a schematic diagram of idleness of an antenna unit when a transmit carrier frequency of an existing advanced antenna system is 1.8GHz;
FIG. 4 is a schematic structural diagram of another embodiment of an antenna system according to the present invention;
FIG. 5 is a beam direction pattern corresponding to different carrier frequency signals transmitted by the antenna system shown in FIG. 4;
FIG. 6 is a schematic structural diagram of still another embodiment of an antenna system according to the present invention;
FIG. 7 is a schematic structural diagram of yet another embodiment of an antenna system according to the present invention; and
FIG. 8 is a schematic structural diagram of an embodiment of a signal transmit device according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

As shown in FIG. 2, when an AAS is adopted to transmit 900MHz carrier frequency signals, antenna units 1, 2, 7, and 8 in each antenna unit group are idle; and as shown in FIG. 3, when 1.8GHz carrier frequency signals are transmitted, antenna units 1, 3, 5, and 7 in each antenna unit group are idle. However, idleness and waste of an antenna unit may be caused after the antenna unit is weighted.

In an embodiment of an antenna system provided in the present invention, the antenna system includes:
at least one antenna unit group, where at least two antenna units are arranged in the vertical direction in each antenna unit group, and each antenna unit includes two antennas which are crosswise arranged.

Carrier frequency signals transmitted by the at least one antenna unit group are identical. A gap between adjacent antenna units which transmit any identical carrier frequency signal in each antenna unit group is a half wavelength of a frequency of the transmitted carrier frequency signal, or a difference between the gap and the half wavelength of the frequency of the transmitted carrier frequency signal is within a first set range.

The number of antenna units which transmit each type of carrier frequency signals is determined by a gap between adjacent antenna units which transmit the type of carrier frequency signals and the coverage radii of at least two types of carrier frequency signals transmitted by the antenna unit group. The coverage radii of the at least two types of carrier frequency signals transmitted by the antenna unit group are equal or a difference between the coverage radii of the at least two types of carrier frequency signals is within a second set range.

The number of antenna unit groups may be selected according to a requirement of actual transmit power, for example, one antenna unit group, two antenna unit groups, or four antenna unit groups may be selected. However, the selection of the number of antenna unit groups does not constitute a limitation to the present invention.

When the number of antenna unit groups in the antenna system is greater than or equal to 2, each antenna unit group transmits an identical carrier frequency signal.

In each antenna unit group, a gap between adjacent antenna units which transmit any identical carrier frequency signal is a half wavelength of a frequency of the transmitted carrier frequency signal, or a difference between the gap and the half wavelength of the frequency of the transmitted carrier frequency signal is within the first set range. One type of carrier frequency signals refers to one type of electromagnetic waves with a specific frequency, and the half wavelength of the frequency of the carrier frequency signal refers to a half of a wavelength of the type of electromagnetic waves with the frequency. In each antenna unit group, for adjacent antenna units which transmit an identical carrier frequency signal, by setting a gap to be a half of a half wavelength, generally, maximum transmit power can be achieved, and a good beam direction pattern can be obtained, and specifically, the energy of a main lobe (an ideal transmit direction of carrier signals) can be centralized and leakage of energy of a side lobe is small. It should be understood that, if the difference between the gap between adjacent antenna units which transmit any identical carrier frequency signal and the half wavelength of the frequency of the transmitted carrier frequency signal is within a certain range (within the first set range), generally, a good beam direction pattern may also be obtained. A value of the first set range may be 0-0.5 time the half wavelength of the transmitted carrier frequency signal, that is, a value range of the gap between adjacent antenna units which transmit any identical carrier frequency signal may be 0.5-1.5 times the half wavelength of the frequency of the transmitted carrier frequency signal. Of course, the value range of the first set range provided in this embodiment does not constitute a limitation to the present invention.

If two or more antenna unit groups are arranged in the antenna system, and the frequencies of at least two types of carrier frequency signals transmitted by each antenna unit group are close and a difference is within a fourth set range (the fourth set range may be that a ratio of the frequencies of any two types of carrier frequency signals transmitted by each antenna unit group is smaller than 4, which, however, cannot be taken as a limitation to the present invention), for example, two types of carrier frequency signals, that is, 800MHz and 900MHz carrier frequency signals, are transmitted, a distance between adjacent antenna unit groups may be a half wavelength of a frequency of one type of carrier frequency signals thereof, for example, a half wavelength of 800MHz is selected. If each antenna unit group transmits more than two types of carrier frequency signals in a frequency band range of 800MHz-900MHz, a gap between the antenna unit groups may adopt a half wavelength of 900MHz. If each antenna unit group transmits two or more types of carrier frequency signals in a frequency band range of 1.8GHz-2.4GHz, a gap between the antenna unit groups may adopt a half wavelength of 1.8GHz. If each antenna unit group transmits two or more types of carrier frequency signals in a frequency band range of 2.4GHz-2.6GHz, a gap between the antenna unit groups may adopt a half wavelength of 2.6GHz. The above only describes the embodiment of the present invention by taking several specific frequency band ranges as an example, which, however, does not constitute a limitation to the present invention. It should be understood that, for other two types of carrier frequency signals with close frequency points, or more than two types of carrier frequency signals with close frequency points in other frequency band ranges, similarly, a half wavelength of a frequency of one type of carrier frequency signals thereof may be selected as the distance between adjacent antenna unit groups.

If a difference between the frequencies of carrier frequency signals transmitted by each antenna unit group is large, for example, five types of carrier frequency signals, that is, 800MHz, 900MHz, 1.8GHz, 2.2GHz, and 2.6GHz carrier frequency signals, are transmitted, a half wavelength of an intermediate frequency, such as 1.8GHz, of several types of carrier frequency signals may be selected as the gap between adjacent antenna unit groups.

In the antenna system, each antenna unit in each antenna unit group simultaneously transmits more than two types of carrier frequency signals as far as possible, so as to meet different use requirements and make full use of each antenna. Moreover, in each antenna unit group, when a gap between adjacent antenna units which transmit any identical carrier frequency signal is a half wavelength or approximately a half wavelength of a frequency of the transmitted carrier frequency signal, maximum transmit power can be achieved and a good beam direction pattern can be obtained. For example, in an antenna unit group, among all antenna units which transmit at 900MHz, a gap between adjacent antenna units should be a half wavelength of 900MHz; and among all antenna units which transmit at 1.8GHz, a gap between adjacent antenna units should be a half wavelength of 1.8GHz. Therefore, in order to enable each type of carrier frequency signals transmitted in the antenna system to achieve maximum transmit power or approximate the maximum transmit power, so as to obtain a good beam direction pattern, among all antenna units which transmit any identical carrier frequency signal, a distance between adjacent antenna units may be equal to a half wavelength of a frequency of the transmitted carrier frequency signal, or a difference between the distance and the half wavelength of the frequency of the transmitted carrier frequency signal is within the first set range, where the value of the first set range may be 0-0.5 time the half wavelength of the frequency of the transmitted carrier frequency signal.

In order to enable all carrier frequency signals transmitted in each antenna unit group to have the same coverage, that is, in order to enable the coverage radii of all the carrier frequency signals to be approximately equal or a difference between the coverage radii to be within a second set range (the second set range may specifically be 5% of a coverage radius of any type of carrier frequency signals transmitted in each antenna unit group), when a gap between adjacent antenna units which transmit any identical carrier frequency signal is a half wavelength or approximately a half wavelength, the numbers of antenna units which transmit each type of carrier frequency signals are equal. If a difference value between a gap between adjacent antenna units which transmit a certain type of carrier frequency signals in an antenna unit group and a half wavelength of the type of carrier frequency signals is not within the first set range, in order to ensure that different types of carrier frequency signals have the same coverage, it is necessary to reduce the number of antenna units which transmit the type of carrier frequency signals. Therefore, the number of antenna units which transmit each type of carrier frequency signals depends on a gap between adjacent antenna units which transmit the type of carrier frequency signals and the coverage radii of at least two types of carrier frequency signals transmitted by the antenna unit group. The larger the difference between the gap and a half wavelength of the transmitted carrier frequency signal is, the smaller the number of adopted antenna units is.

In addition, it should be noted that, in order to take account of the positions of and the numbers of antenna units which transmit at the two or more frequencies in one antenna unit group, so as to avoid idleness of an antenna unit, if a difference between the frequencies of two or more types of carrier frequency signals transmitted in each antenna unit group is within a third set range (the third set range may be that, in any two types of carrier frequency signals transmitted by each antenna unit group, a ratio of the frequencies of the any two types of carrier frequency signals is smaller than 4, which, however, cannot be taken as a limitation to the present invention), the gap between adjacent antenna units may be set to be a half wavelength of one type of the carrier frequencies, so that the two or more types of carrier frequency signals may share several antenna units in one antenna unit group, thereby reducing the number of antenna units and reducing installation and maintenance costs of the antenna system. For example, for all antenna units which simultaneously transmit 800MHz and 900MHz carrier frequency signals, a gap between adjacent antenna units may be set to be a half wavelength of 900MHz; and for all antenna units which simultaneously transmit more than two types of 1.8GHz, 2.2GHz, and 2.6GHz carrier frequency signals, a gap between adjacent antenna units may be set to be a half wavelength of 1.8GHz. If each antenna unit group transmits more than two types of carrier frequency signals in a frequency band range of 800MHz-900MHz, a gap between adjacent antenna units may adopt a half wavelength of 900MHz. If each antenna unit group transmits two or more types of carrier frequency signals in a frequency band range of 1.8GHz-2.4GHz, a gap between adjacent antenna units may adopt a half wavelength of 1.8GHz. If each antenna unit group transmits two or more types of carrier frequency signals in a frequency band range of 2.4GHz-2.6GHz, a gap between adjacent antenna units may adopt a half wavelength of 2.6GHz. If two or more types of carrier frequency signals in a frequency band range of 800MHz-900MHz are transmitted, and two or more types of carrier frequency signals in a frequency band range of 1.8GHz-2.4GHz are transmitted, a half wavelength of 1.8GHz may be selected as the gap between adjacent antenna units. If two or more types of carrier frequency signals in a frequency band range of 800MHz-900MHz are transmitted, two or more types of carrier frequency signals in a frequency band range of 1.8GHz-2.4GHz are transmitted, and two or more types of carrier frequency signals in a frequency band range of 2.4GHz-2.6GHz are transmitted, a half wavelength of 1.8GHz may be selected as the gap between adjacent antenna units. The above only describes the embodiment of the present invention by taking several specific frequency band ranges as an example, which, however, does not constitute a limitation to the present invention. It should be understood that, for other two types of carrier frequency signals with close frequency points, or more than two types of carrier frequency signals with close frequency points in other frequency band ranges, similarly, a half wavelength of a frequency of one type of carrier frequency signals thereof may be selected as the distance between adjacent antenna units.

According to the antenna system provided in the embodiment of the present invention, a distance between adjacent antenna units which transmit any identical carrier frequency signal is a half wavelength of a frequency of the transmitted carrier frequency, or a difference is within a preset range, and the number of antenna units which transmit each type of carrier frequency signals is determined by a gap between adjacent antenna units which transmit the type of carrier frequency signals and the coverage radii of carrier frequency signals transmitted by an antenna unit group, so that all carrier frequency signals transmitted by the antenna system have the same coverage, thereby effectively utilizing each antenna unit, avoiding waste and control idleness of the antenna unit, and reducing installation and maintenance costs of the antenna system.

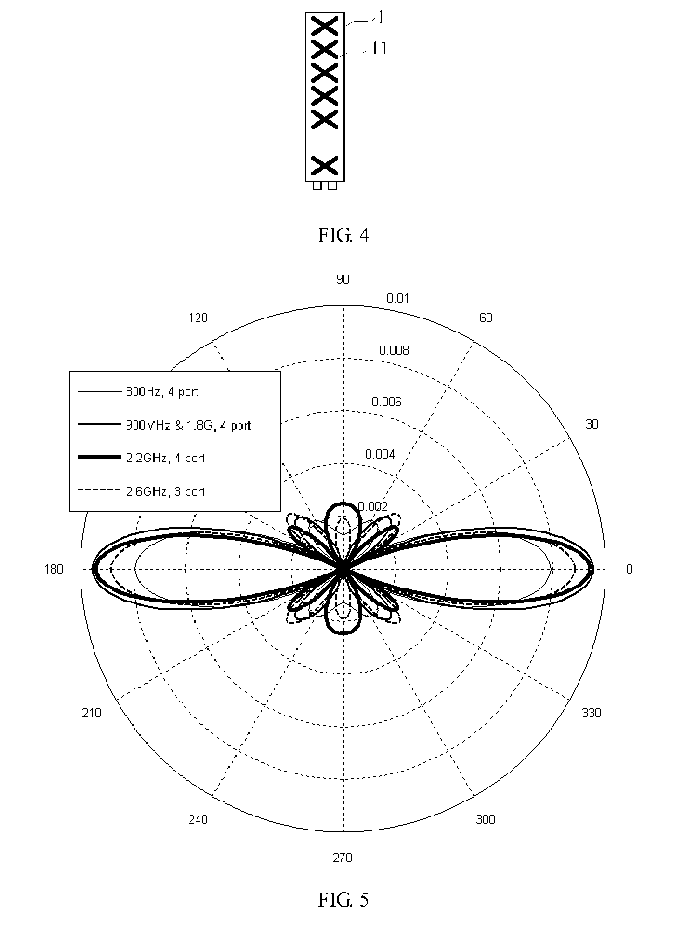

FIG. 4 is a schematic structural diagram of another embodiment of an antenna system according to the present invention. As shown in FIG. 4, the antenna system includes:
at least one antenna unit group 1, where at least two antenna units 11 are arranged in the vertical direction in each antenna unit group 1, and each antenna unit 11 includes two antennas which are crosswise arranged.

Carrier frequency signals transmitted by the at least one antenna unit group 1 are identical. A gap between adjacent antenna units 11 which transmit any identical carrier frequency signal in each antenna unit group 1 is a half wavelength of a frequency of the transmitted carrier frequency signal, or a difference between the gap and the half wavelength of the frequency of the transmitted carrier frequency signal is within a first set range.

The number of antenna units 11 which transmit each type of carrier frequency signals is determined by a gap between adjacent antenna units 11 which transmit the type of carrier frequency signals and the coverage radii of at least two types of carrier frequency signals transmitted by the antenna unit group 1. The coverage radii of the at least two types of carrier frequency signals transmitted by the antenna unit group 1 are equal or a difference between the coverage radii of the at least two types of carrier frequency signals is within a second set range.

FIG. 4 shows a situation where the antenna system includes one antenna unit group 1.

In order to reduce the number of antenna units 11 in each antenna unit group 1 and make full use of each antenna unit 11, it is necessary to enable each antenna unit 11 to transmit carrier frequency signals as far as possible, and to transmit more than two types of carrier frequency signals as far as possible, that is, to multiplex each antenna unit 11 as far as possible, so as to reduce the number of antenna units 11. Therefore, if a difference between the frequencies of at least two types of carrier frequency signals transmitted by the antenna system is within a third set range (the third set range may be that a ratio of the frequencies of any two types of carrier frequency signals transmitted by each antenna unit group 1 is smaller than 4, which however, cannot be taken as a limitation to the present invention), a gap between adjacent antenna units 11, among the antenna units 11 which transmit at least two types of carrier frequency signals, is a half wavelength of one carrier frequency of the at least two types of carrier frequency signals. For two types of carrier frequency signals with close frequencies, half wavelengths of the frequencies thereof are also close. For one type of carrier frequency signals, if a gap between adjacent antenna units 11, among a plurality of antenna units 11 which transmit the type of carrier frequency signals, is a half wavelength of a close carrier frequency signal frequency, the carrier frequency signal can also achieve approximately maximum transmit power, a good beam direction pattern can be obtained, and more than two types of carrier frequency signals can share a plurality of antenna units 11.

Taking that the antenna unit group 1 transmits 800MHz and 900MHz carrier frequency signals as an example, the gap between adjacent antenna units 11 in the antenna unit group 1 may be set to be a half wavelength of 900MHz. With such setting, for a plurality of antenna units 11 which transmit 800MHz carrier frequency signals, a gap between adj acent antenna units 11 is 0.444 time the wavelength of 800MHz, and a difference between the gap and a half wavelength of 800MHz is within the first set range (a value within the first set range may be 0-0.5 time the half wavelength of the frequency of the carrier frequency signal transmitted by the antenna units 11, that is, a value range of the gap between adjacent antenna units 11 which transmit any identical carrier frequency signal may be 0.5-1.5 times the half wavelength of the frequency of the transmitted carrier frequency signal, which, however, cannot be taken as a limitation to the present invention). Therefore, the 800MHz carrier frequency signals can also be close to maximum transmit power.

Further, taking that the antenna unit group 1 transmits at least two types of 1.8GHz, 2.2GHz, and 2.6GHz carrier frequency signals as an example, the gap between adjacent antenna units 11 in the antenna unit group 1 may be set to be a half wavelength of 1.8GHz. With such setting, for a plurality of antenna units 11 which transmit 2.2GHz carrier frequency signals, a gap between adjacent antenna units 11 is 0.583 time the wavelength of 2.2GHz, and a difference between the gap and a half wavelength of 2.2GHz is within the first set range; and for a plurality of antenna units 11 which transmit 2.6GHz carrier frequency signals, a gap between adjacent antenna units 11 is 0.722 time the wavelength of 2.6GHz, which can similarly meet a transmit power requirement of the 2.6GHz carrier frequency signals.

The following takes a specific example for description, if the antenna unit group 1 transmits at least one type of 800MHz or 900MHz carrier frequency signals and at least one type of 1.8GHz, 2.2GHz, or 2.6GHz, six antenna units 11 may be arranged in the vertical direction in the antenna unit group 1. Among first five antenna units 11 in the six antenna units 11 from top to bottom, a distance between adjacent antenna units 11 is a half wavelength of 1.8GHz, and a distance between the last two antenna units 11 in the six antenna units 11 from top to bottom is a half wavelength of 900MHz.

For any type of carrier frequency signals transmitted by the antenna unit group 1, a gap between adjacent antenna units 11 which transmit the carrier frequency signal is a half wavelength of a frequency of the carrier frequency signal, or a difference between the gap and the half wavelength of the frequency of the carrier frequency signal is within the first set range. It can be seen that, in the six antenna units 11 from top to bottom, the first, third, fifth and sixth antenna units 11 are configured to transmit 800MHz and/or 900MHz carrier frequency signals; the second to the fifth antenna units 11 are configured to transmit 1.8GHz and/or 2.2GHz carrier frequency signals; and the third to the fifth antenna units 11 are configured to transmit 2.6GHz carrier frequency signals.

FIG. 5 is a beam direction pattern corresponding to different carrier frequency signals transmitted by the antenna system shown in FIG. 4. FIG. 5 shows a situation where the antenna unit group 1 shown in FIG. 4 transmits five types of carrier frequency signals, that is, 800MHz, 900MHz, 1.8GHz, 2.2GHz, and 2.6GHz carrier frequency signals. A gap between adjacent antenna units 11 which are configured to transmit 800MHz and 900MHz carrier frequency signals is a half wavelength of 900MHz. Antenna units 11 which are configured to transmit 800MHz carrier frequency signals are the first, third, fifth, and sixth antenna units 11 from top to bottom in the antenna unit group 1 shown in FIG. 4. Antenna units 11 which are configured to transmit 900MHz carrier frequency signals are the first, third, fifth, and sixth antenna units 11 from top to bottom in the antenna unit group 1 shown in FIG. 4. A gap between adjacent antenna units 11 which are configured to transmit 1.8GHz, 2.2GHz, and 2.6GHz carrier frequency signals is a half wavelength of 1.8GHz. Antenna units 11 which are configured to transmit 1.8GHz carrier frequency signals are the second to the fifth antenna units 11 from top to bottom in the antenna unit group 1 shown in FIG. 4. Antenna units 11 which are configured to transmit 2.2GHz carrier frequency signals are the second to the fifth antenna units 11 from top to bottom in the antenna unit group 1 shown in FIG. 4. Antenna units 11 which are configured to transmit 2.6GHz carrier frequency signals are the third to the fifth antenna units 11 from top to bottom in the antenna unit group 1 shown in FIG. 4. It can be seen that, in the antenna unit group 1, the numbers of antenna units 11 which are configured to transmit carrier frequency signals of four frequencies, that is, 800MHz, 900MHz, 1.8GHz, and 2.2GHz carrier frequency signals, are all 4, and the number of antenna units 11 which are configured to transmit 2.6GHz carrier frequency signals is 3. The reason is that a gap between adjacent antenna units 11 which transmit 2.6GHz carrier frequency signals is 0.722 time the wavelength of 2.6GHz, which is greatly different from a half wavelength of 2.6GHz. Therefore, it is necessary to reduce the number of antenna units 11 to ensure the same coverage as carrier frequency signals with other frequencies.

It can be seen from FIG. 5 that, the coverage radii of different transmitted carrier frequency signals still have a certain difference. In this case, for the different carrier frequency signals, a difference of an antenna beam direction pattern may be modified by adjusting work transmit power, so as to achieve that the radii of the different carrier frequency signals have the same coverage as far as possible.

According to the antenna system provided in this embodiment, a distance between adjacent antenna units which transmit any identical carrier frequency signal is a half wavelength of the transmitted carrier frequency, or a difference is within a first set range, and the number of antenna units which transmit each type of carrier frequency signals is determined by a gap between adjacent antenna units and determined by that the coverage radii of carrier frequency signals transmitted by an antenna unit group are equal or a difference between the coverage radii is within a preset range, thereby effectively utilizing each antenna unit, avoiding waste and idleness of the antenna unit, reducing the number of antenna units in the antenna unit group, and reducing installation and maintenance costs of the antenna system.

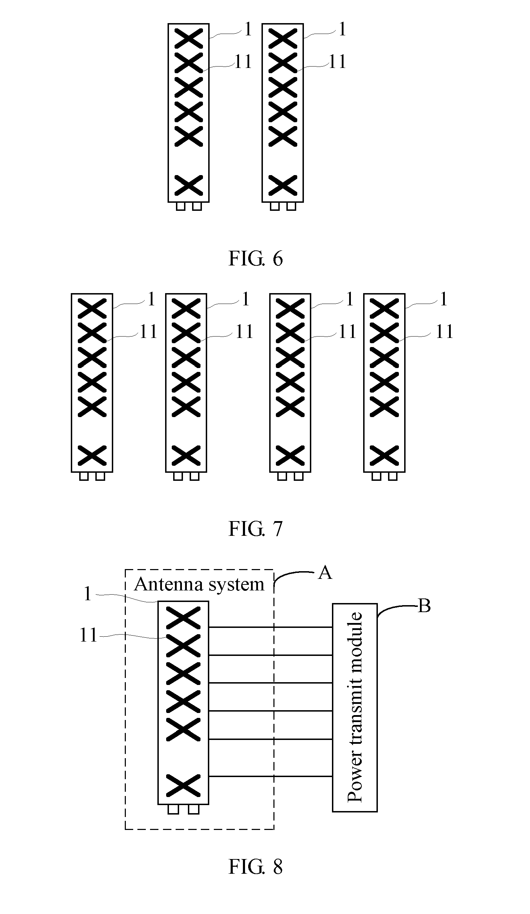

FIG. 6 is a schematic structural diagram of another embodiment of an antenna system according to the present invention. FIG. 6 shows a situation where the antenna system includes two antenna unit groups 1. FIG. 7 is a schematic structural diagram of still another embodiment of an antenna system according to the present invention. FIG. 7 shows a situation where the antenna system includes four antenna unit groups 1.

In the embodiments shown in FIG. 6 and FIG. 7, for the arrangement of each antenna unit 11 in the antenna unit groups 1, reference may be made to the embodiment shown in FIG. 4. For a distance between the antenna unit groups 1, if the frequencies of at least two types of carrier frequency signals transmitted by each antenna unit group 1 are close and a difference is within a fourth set range (the fourth set range may be that a ratio of the frequencies of any two types of carrier frequency signals transmitted by each antenna unit group 1 is smaller than 4, which, however, cannot be taken as a limitation to the present invention), for example, two types of carrier frequency signals, that is, 800MHz and 900MHz carrier frequency signals, are transmitted, a distance between adjacent antenna unit groups 1 may be a half wavelength of a frequency of one type of carrier frequency signals thereof, for example, a half wavelength of 800MHz is selected. If each antenna unit group 1 transmits more than two types of carrier frequency signals in a frequency band range of 800MHz-900MHz, a gap between the antenna unit groups 1 may adopt a half wavelength of 900MHz. If each antenna unit group 1 transmits two or more types of carrier frequency signals in a frequency band range of 1.8GHz-2.4GHz, a gap between the antenna unit groups 1 may adopt a half wavelength of 1.8GHz. If each antenna unit group 1 transmits two or more types of carrier frequency signals in a frequency band range of 2.4GHz-2.6GHz, a gap between the antenna unit groups 1 may adopt a half wavelength of 2.6GHz. The above only describes the embodiment of the present invention by taking several specific frequency band ranges as an example, which, however, does not constitute a limitation to the present invention. It should be understood that, for other two types of carrier frequency signals with close frequency points, or more than two types of carrier frequency signals with close frequency points in other frequency band ranges, similarly, a half wavelength of a frequency of one type of carrier frequency signals thereof may be selected as the distance between adjacent antenna unit groups 1.

If a difference between the frequencies of carrier frequency signals transmitted by each antenna unit group 1 is not within the fourth set range, for example, five types of carrier frequency signals, that is, 800MHz, 900MHz, 1.8GHz, 2.2GHz, and 2.6GHz carrier frequency signals, are transmitted, a half wavelength of an intermediate frequency, such as 1.8GHz, of several types of carrier frequency signals may be selected as the gap between adjacent antenna unit groups 1.

In the embodiments of the antenna unit groups 1 provided in FIG. 4, FIG. 6, and FIG. 7, that each antenna unit 11 transmits a carrier signal of a specific frequency point is taken as an example for description. It should be understood that, the antenna system provided in the present invention is also applicable to a situation where carrier signals transmitted by each antenna unit 11 are within a certain frequency band range.

Specifically, if each antenna unit group 1 transmits more than two types of carrier frequency signals in a frequency band range of 800MHz-900MHz, a gap between adjacent antenna units 11 may adopt a half wavelength of 900MHz. If each antenna unit group 1 transmits two or more types of carrier frequency signals in a frequency band range of 1.8GHz-2.4GHz, a gap between adjacent antenna units 11 may adopt a half wavelength of 1.8GHz. If each antenna unit group 1 transmits two or more types of carrier frequency signals in a frequency band range of 2.4GHz-2.6GHz, a gap between adjacent antenna units 11 may adopt a half wavelength of 2.6GHz. If two or more types of carrier frequency signals in a frequency band range of 800MHz-900MHz are transmitted, and two or more types of carrier frequency signals in a frequency band range of 1.8GHz-2.4GHz are transmitted, a half wavelength of 1.8GHz may be selected as the gap between adjacent antenna units 11. If two or more types of carrier frequency signals in a frequency band range of 800MHz-900MHz are transmitted, two or more types of carrier frequency signals in a frequency band range of 1.8GHz-2.4GHz are transmitted, and two or more types of carrier frequency signals in a frequency band range of 2.4GHz-2.6GHz are transmitted, a half wavelength of 1.8GHz may be selected as the gap between adjacent antenna units 11. The above only describes the embodiment of the present invention by taking several specific frequency band ranges as an example, which, however, does not constitute a limitation to the present invention. It should be understood that, for other two types of carrier frequency signals with close frequency points, or more than two types of carrier frequency signals with close frequency points in other frequency band ranges, similarly, a half wavelength of a frequency of one type of carrier frequency signals thereof may be selected as the distance between adjacent antenna units 11.

If the antenna unit group 1 transmits at least one type of carrier frequency signals in a frequency band range of 800MHz-900MHz, at least one type of carrier frequency signals in a frequency band range of 1.8GHz-2.4GHz, and at least one type of carrier frequency signals in a frequency band range of 2.4-2.6GHz, for the specific structure of the antenna unit group 1, reference may still be made to FIG. 4. In the vertical direction, six antenna units 11 may be arranged. Among the first five antenna units 11 in the six antenna units 11 from top to bottom, a distance between adjacent antenna units 11 may be a half wavelength of 1.8GHz, and a distance between the last two antenna units 11 in the six antenna units 11 from top to bottom may be a half wavelength of 900MHz.

For any type of carrier frequency signals transmitted by the antenna unit group 1, a gap between adjacent antenna units 11 which transmit the carrier frequency signal is a half wavelength of a frequency of the carrier frequency signal, or a difference between the gap and the half wavelength of the frequency of the carrier frequency signal is within the first set range. It can be seen that, in the six antenna units 11 from top to bottom, the first, third, fifth and sixth antenna units 11 are configured to transmit carrier frequency signals in a frequency band range of 800MHz-900MHz; the second to the fifth antenna units 11 are configured to transmit carrier frequency signals in a frequency band range of 1.8GHz-2.4GHz; and the third to the fifth antenna units 11 are configured to transmit carrier frequency signals in a frequency band range of 2.4-2.6GHz.

The embodiments of the present invention describe the structure of the antenna system provided in the present invention by merely taking common frequency points or frequency band ranges in a current communications system as an example. It should be understood that, the antenna system provided in the present invention is also applicable to carrier frequency signals of other various frequency points or frequency band ranges, which are not listed one by one herein.

FIG. 8 is a schematic structural diagram of an embodiment of a signal transmit device according to the present invention. As shown in FIG. 8, the signal transmit device may include: an antenna system A and a power transmit module B.

The antenna system A includes: at least one antenna unit group 1, where at least two antenna units 11 are arranged in the vertical direction in each antenna unit group 1, and each antenna unit 11 includes two antennas which are crosswise arranged.

Carrier frequency signals transmitted by the at least one antenna unit group 1 are identical. A gap between adjacent antenna units 11 which transmit any identical carrier frequency signal in each antenna unit group 1 is a half wavelength of a frequency of the transmitted carrier frequency signal, or a difference between the gap and the half wavelength of the frequency of the transmitted carrier frequency signal is within a first set range.

The number of antenna units 11 which transmit each type of carrier frequency signals is determined by a gap between adjacent antenna units 11 which transmit the type of carrier frequency signals and the coverage radii of at least two types of carrier frequency signals transmitted by the antenna unit group 1. The coverage radii of the at least two types of carrier frequency signals transmitted by the antenna unit group 1 are equal or a difference between the coverage radii of the at least two types of carrier frequency signals is within a second set range.

The power transmit module B is configured to transmit a carrier frequency signal.

Each antenna unit 11 in each antenna unit group 1 in the antenna system A is connected to the power transmit module B.

In the signal transmit device provided in this embodiment, for the specific structure and functions of the antenna system A, reference may be made to the embodiments of the antenna system provided in the present invention, and detailed are not repeated herein.

According to the signal transmit device provided in this embodiment, a distance between adjacent antenna units which transmit any identical carrier frequency signal is a half wavelength of the transmitted carrier frequency, or a difference is within a first set range, and the number of antenna units which transmit each type of carrier frequency signals is determined by a gap between adjacent antenna units and determined by the coverage radii of carrier frequency signals transmitted by an antenna unit group, thereby effectively utilizing each antenna unit, avoiding waste and idleness of the antenna unit, reducing the number of antenna units in the antenna unit group, and further reducing the number of power transmit modules, and reducing installation and maintenance costs of the antenna system.

It should be noted that, in the user equipment and base station embodiments, all included units are classified by functional logic, but the present invention is not limited to the above classification, as long as corresponding functions can be implemented. In addition, the specific names of all functional units are merely for facilitating differentiation between each other, but are not intended to limit the protection scope of the present invention.

In addition, a person of ordinary skill in the art may understand that, all or part of the steps of method embodiments may be implemented by a program instructing relevant hardware. The corresponding program may be stored in a computer readable storage medium, and the storage medium may be a read-only memory, a magnetic disk, an optical disk, or the like.

The foregoing descriptions are merely exemplary specific embodiments of the present invention, but are not intended to limit the protection scope of the present invention. Any variation or replacement figured out by a person skilled in the art within the technical scope disclosed in the embodiments of the present invention shall fall within the protection scope of the present invention. Therefore, the protection scope of the present invention shall be subject to the protection scope of the claims.

## Claims

1. An antenna system, comprising: at least one antenna unit group, wherein at least two antenna units are arranged in the vertical direction in each antenna unit group, and each antenna unit comprises two antennas which are crosswise arranged, wherein
carrier frequency signals transmitted by the at least one antenna unit group are identical, and a gap between adjacent antenna units which transmit any identical carrier frequency signal in each antenna unit group is a half wavelength of a frequency of the transmitted carrier frequency signal, or a difference between the gap and the half wavelength of the frequency of the transmitted carrier frequency signal is within a first set range; and
the number of antenna units which transmit each type of carrier frequency signals is determined by a gap between adjacent antenna units which transmit the type of carrier frequency signals and coverage radii of at least two types of carrier frequency signals transmitted by the antenna unit group, and the coverage radii of the at least two types of carrier frequency signals transmitted by the antenna unit group are equal or a difference between the coverage radii of the at least two types of carrier frequency signals is within a second set range.

2. The antenna system according to claim 1, wherein the first set range is 0-0.5 time the half wavelength of the frequency of the transmitted carrier frequency signal, and the second set range is 5% of a coverage radius of any type of carrier frequency signals of the at least two types of carrier frequency signals.

3. The antenna system according to claim 1 or 2, wherein that a difference between the gap and the half wavelength of the frequency of the transmitted carrier frequency signal is within a first set range comprises:
when a difference between frequencies of at least two types of carrier frequency signals transmitted by the antenna unit group is within a third set range, a gap between adjacent antenna units in the antenna unit group being a half wavelength of a frequency of any type of carrier frequency signals of the at least two types of carrier frequency signals, wherein the third set range is that a ratio of frequencies of any two types of carrier frequency signals of the at least two types of carrier frequency signals is smaller than 4.

4. The antenna system according to claim 3, wherein if the antenna unit group is configured to transmit carrier frequency signals with frequencies of 800MHz and 900MHz, the gap between adjacent antenna units in the antenna unit group is a half wavelength of 900MHz; and
if the antenna unit group is configured to transmit at least two types of carrier frequency signals with frequencies of 1.8GHz, 2.2GHz and 2.6GHz, the gap between adjacent antenna units in the antenna unit group is a half wavelength of 1.8GHz.

5. The antenna system according to claim 3, wherein when the antenna unit group is configured to transmit at least one type of carrier frequency signals with frequencies of 800MHz or 900MHz, and is configured to transmit at least one type of carrier frequency signals with frequencies of 1.8GHz, 2.2GHz, or 2.6GHz, six antenna units are arranged in the vertical direction in the antenna unit group, wherein among first five antenna units in the six antenna units from top to bottom, a distance between adjacent antenna units is a half wavelength of 1.8GHz, and a distance between last two antenna units in the six antenna units from top to bottom is a half wavelength of 900MHz.

6. The antenna system according to claim 5, wherein the first, third, fifth and sixth antenna units in the six antenna units from top to bottom are configured to transmit 800MHz and/or 900MHz carrier frequency signals.

7. The antenna system according to claim 5 or 6, wherein the second to the fifth antenna units in the six antenna units from top to bottom are configured to transmit 1.8GHz and/or 2.2GHz carrier frequency signals;
and/or the third to the fifth antenna units in the six antenna units from top to bottom are configured to transmit 2.6GHz carrier frequency signals.

8. The antenna system according to claim 1 or 2, wherein when a difference between frequencies of at least two types of carrier frequency signals transmitted by each antenna unit group is within a fourth set range, the gap between adjacent antenna unit groups is a half wavelength of a frequency of any type of carrier frequency signals of the at least two types of carrier frequency signals, wherein the fourth set range is that a ratio of frequencies of any two types of carrier frequency signals of the at least two types of carrier frequency signals is smaller than 4.

9. A signal transmit device, comprising: the antenna system according to any one of claims 1-8 and a power transmit module, wherein
the power transmit module is configured to transmit a carrier frequency signal; and
each antenna unit in each antenna unit group in the antenna system is connected to the power transmit module.
